# FASCICULE DE BREVET EUROPEEN

(11) **EP 4 476 433 B1**
(45) Date de publication et mention de la délivrance du brevet: **16.09.2026**
(21) Numéro de dépôt: 23703249.5
(22) Date de dépôt: 09.02.2023
(51) Int. Cl.: F02C 3/22, F02C 7/224, F02C 6/10

(54) **ENSEMBLE COMPRENANT UNE TURBOMACHINE DE CHAUFFAGE POUR UN SYSTÈME DE CONDITIONNEMENT DE CARBURANT CONFIGURÉ POUR ALIMENTER UN TURBOMOTEUR D'AÉRONEF À PARTIR DE CARBURANT ISSU D'UN RÉSERVOIR CRYOGÉNIQUE**
BAUGRUPPE MIT HEIZTURBOMASCHINE FÜR EIN BRENNSTOFFAUFBEREITUNGSSYSTEM ZUR VERSORGUNG EINES FLUGZEUGTURBOMOTORS MIT BRENNSTOFF AUS EINEM KRYOTANK
ASSEMBLY COMPRISING A HEATING TURBOMACHINE FOR A FUEL-CONDITIONING SYSTEM CONFIGURED TO SUPPLY AN AIRCRAFT TURBOSHAFT ENGINE WITH FUEL FROM A CRYOGENIC TANK

(30) Priorité: 11.02.2022 FR 2201236
(43) Date de publication de la demande: 18.12.2024
(73) Titulaire: SAFRAN, 75015 Paris (FR)
(72) Inventeur: PARMENTIER, Nicolas Claude, 77550 MOISSY-CRAMAYEL (FR); MAALOUF, Samer, 77550 MOISSY-CRAMAYEL (FR)
(74) Mandataire: Argyma
(86) Numéro de dépôt international: PCT/EP2023/053217
(87) Numéro de publication internationale: WO 2023/152232

(56) Documents cités:
- EP-A2- 2 385 234
- WO-A1-2022/023648
- FR-A1- 3 110 938
- GB-A- 869 274

## Description

### DOMAINE TECHNIQUE

La présente invention concerne le domaine des aéronefs comportant un ou plusieurs turbomoteurs alimentés par du carburant stocké dans un réservoir cryogénique.

Il est connu de stocker du carburant, en particulier de l'hydrogène, sous forme liquide pour limiter l'encombrement et la masse des réservoirs de l'aéronef. A titre d'exemple, l'hydrogène est stocké à une température de l'ordre de 20 à 22 Kelvins (- 253 à -251°C) dans un réservoir cryogénique de l'aéronef.

Afin de pouvoir être injecté dans une chambre de combustion d'un turbomoteur, le carburant doit être chauffé afin de permettre une combustion optimale. Une telle étape de chauffage est par exemple nécessaire pour réduire le risque de givrage de la vapeur d'eau contenue dans l'air qui circule dans le turbomoteur, en particulier, au niveau des injecteurs de carburant du turbomoteur.

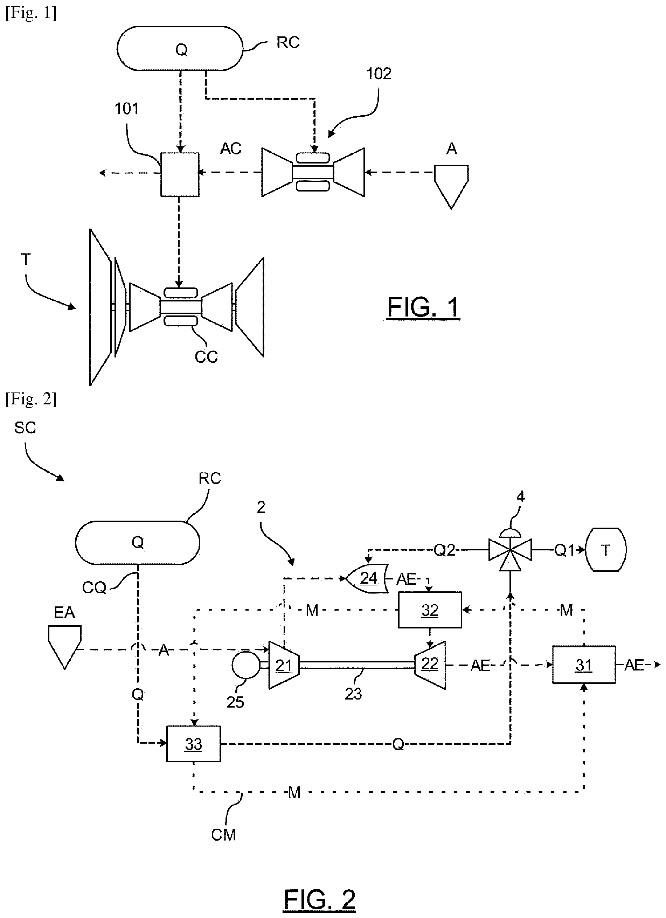

En pratique, l'étape de chauffage du carburant est énergivore et nécessite de prélever des calories sur des sources chaudes. Parmi les différentes technologies pour chauffer le carburant liquide, il est connu, en référence à la figure 1, de générer un flux d'air de chauffage AC au moyen d'une turbomachine de chauffage 102 alimentée, d'une part, par du carburant Q issu d'un réservoir cryogénique RC et, d'autre part, par un flux d'air A. Un échangeur de chaleur 101 permet avantageusement de transférer des calories du flux d'air de chauffage AC au flux de carburant liquide Q afin de le rendre gazeux. Il est ainsi apte à être consommé dans une chambre de combustion CC du turbomoteur T.

En pratique, il est complexe pour la turbomachine de chauffage 102 de générer une grande quantité de chaleur avec un bon rendement. En effet, par nature, une turbomachine est optimisée pour maximiser son énergie mécanique et limiter ses pertes thermiques. Dans les faits, l'énergie thermique générée est proportionnelle à l'énergie mécanique générée. Aussi, pour générer suffisamment d'énergie thermique pour chauffer le flux de carburant, il est nécessaire d'utiliser une turbomachine de taille importante qui génère une grande quantité d'énergie mécanique non désirée.

Il est connu dans l'art antérieur les documents FR3110938A1, WO2022/023648A1 et EP2385234A2.

Un des objectifs de la présente invention est de proposer une turbomachine qui permette de réaliser un chauffage optimal tout en ayant un encombrement faible et une masse réduite.

### PRESENTATION DE L'INVENTION

L'invention concerne un ensemble selon la revendication 1.

Grâce à l'invention, l'énergie thermique de la turbomachine est captée directement en sortie de la chambre de combustion avant qu'elle soit convertie en énergie mécanique par la turbine. Le rendement thermique de la turbomachine de chauffage est alors amélioré, ce qui est avantageux pour prélever des calories destinées au chauffage d'un flux de carburant issu d'un réservoir cryogénique.

Selon l'invention, la turbomachine de chauffage comprend au moins un échangeur thermique d'échappement, monté dans le circuit de fluide, configuré pour réchauffer le fluide caloporteur à partir de calories prélevées dans le flux d'air d'échappement en sortie de la turbine. L'utilisation d'un deuxième échangeur permet de limiter le gradient thermique dans un échangeur pour améliorer la récupération de calories.

De préférence, l'échangeur thermique post-combustion est monté en aval de l'échangeur thermique d'échappement dans le circuit de fluide. Ainsi, le fluide caloporteur est chauffé progressivement avec des sources de plus en plus chaudes.

De manière préférée, l'échangeur thermique post-combustion et l'échangeur thermique d'échappement sont montés de manière adjacente. Ainsi, l'encombrement est réduit et il n'est pas nécessaire de prévoir des canalisations de jonction entre les échangeurs.

De préférence, les échangeurs de chaleur sont alignés selon un axe qui est orthogonal à l'arbre de turbomachine de manière à faciliter la circulation des flux d'air et de fluide caloporteur.

De manière préférée, l'échangeur thermique post-combustion s'étend co-axialement à l'arbre de turbomachine afin de réduire l'encombrement.

De préférence encore, la chambre de combustion est tubulaire et s'étend co-axialement à l'arbre de turbomachine. Ainsi, on simplifie la forme de la chambre de combustion étant donné qu'elle ne doit pas contourner l'arbre comme dans une turbomachine classique.

Selon un aspect de l'invention, la chambre de combustion comporte un échangeur thermique auxiliaire configuré pour réchauffer un flux de carburant destiné à l'alimentation de ladite chambre de combustion. Cela est particulièrement avantageux quand un flux de carburant est utilisé comme fluide caloporteur. La compacité est augmentée de manière importante.

De préférence, la turbomachine de chauffage comprend une première chambre de combustion en amont de l'échangeur thermique post-combustion et une deuxième chambre de combustion en aval de l'échangeur thermique post-combustion. La deuxième chambre de combustion permet d'augmenter la température du flux d'air d'échappement avant sa circulation dans la turbine, ce qui permet d'utiliser une turbine traditionnelle, compacte et performante, adaptée pour être entrainée par un flux d'échappement à haute température.

De préférence, l'ensemble comprend un échangeur thermique monté dans le circuit de carburant pour échanger des calories avec le fluide caloporteur.

Selon un aspect, le flux de carburant est utilisé directement comme fluide caloporteur dans la turbomachine de chauffage.

L'invention concerne aussi un procédé de chauffage selon la revendication 10.

Il est également présenté une turbomachine de chauffage, non couvert par les revendications, pour un système de conditionnement de carburant configuré pour alimenter un turbomoteur d'aéronef à partir de carburant issu d'un réservoir cryogénique, la turbomachine de chauffage comprenant :
- un compresseur configuré pour être alimenté par un flux d'air issu d'une entrée d'air,
- une turbine reliée au compresseur par un arbre de turbomachine et
- une chambre de combustion configurée pour être alimentée, d'une part, par le flux d'air issu du compresseur et, d'autre part, par un flux de carburant, la chambre de combustion étant configurée pour évacuer un flux d'air d'échappement chargé de calories et entrainer en rotation la turbine,

La turbomachine de chauffage comporte au moins un circuit de fluide dans lequel circule, d'amont vers l'aval, un fluide caloporteur et au moins un échangeur thermique pré-combustion, monté dans le circuit de fluide, configuré pour prélever des calories dans le flux d'air issu du compresseur entre le compresseur et la chambre de combustion.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'une architecture pour le conditionnement de carburant d'un réservoir cryogénique jusqu'à un turbomoteur selon l'art antérieur.
La figure 2 est une représentation schématique d'une architecture pour le conditionnement de carburant d'un réservoir cryogénique jusqu'à un turbomoteur comprenant une turbomachine de chauffage selon une forme de réalisation de l'invention.
La figure 3 est une représentation schématique de la turbomachine de chauffage de la figure 2.
La figure 4 est une représentation schématique d'un diagramme énergétique de la turbomachine de chauffage.
La figure 5 est une représentation schématique d'une deuxième forme de réalisation d'une turbomachine de chauffage.
La figure 6 est une représentation schématique d'une troisième forme de réalisation d'une turbomachine de chauffage.
La figure 7 est une représentation schématique d'une quatrième forme de réalisation d'une turbomachine de chauffage.
La figure 8 est une représentation schématique d'une autre forme de réalisation d'une turbomachine de chauffage.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 2, il est représenté une architecture d'un système de conditionnement de carburant SC selon une forme de réalisation de l'invention pour conduire du carburant Q d'un réservoir cryogénique RC jusqu'à la chambre de combustion d'un turbomoteur T d'un aéronef.

Dans cet exemple, le carburant est de l'hydrogène liquide mais l'invention s'applique à d'autres types de carburant, par exemple, du méthane liquide ou du gaz naturel liquéfié.

Selon l'invention, il est prévu un système de conditionnement de carburant SC configuré pour alimenter la chambre de combustion du turbomoteur T à partir de carburant en phase liquide issu du réservoir cryogénique RC. Le système de conditionnement SC permet de prélever un flux de carburant Q dans le réservoir cryogénique RC. Comme cela sera présenté par la suite, le système de conditionnement SC permet de réchauffer le carburant à une température optimale.

En référence à la figure 2, le système de conditionnement SC comprend un circuit de carburant CQ dans lequel circule d'amont en aval un flux de carburant Q. Le circuit de carburant CQ (en tirets rapprochés sur la figure 2) comprend ainsi une entrée configurée pour être connecté fluidiquement au réservoir cryogénique RC et une sortie configurée pour être connectée fluidiquement au turbomoteur T.

En référence à la figure 2, le système de conditionnement SC comprend en outre une turbomachine de chauffage 2 qui comprend un compresseur 21 configuré pour être alimenté par un flux d'air A issu d'une entrée d'air EA, une turbine 22 reliée au compresseur 21 par un arbre 23 et une chambre de combustion 24 configurée pour être alimentée, d'une part, par le flux d'air A issu du compresseur 21 et, d'autre part, par un flux de carburant Q issu du réservoir cryogénique RC. La chambre de combustion 24 est configurée par ailleurs pour évacuer un flux d'air d'échappement AE chargé de calories afin d'entrainer en rotation la turbine 22.

Dans cet exemple, le compresseur 21 comprend un étage centrifuge. De plus, dans cet exemple, la turbine 22 comprend deux étages axiaux mais il va de soi que cela pourrait être différent. En particulier, la turbine 22 pourrait comprendre un étage radial suivi d'un étage axial, uniquement un étage radial ou uniquement un étage axial. Dans cet exemple, la chambre de combustion 24 est annulaire de manière à être déportée de l'arbre 23 mais il va de soi qu'elle pourrait être mono-tubulaire comme présenté par la suite. De préférence, la chambre de combustion 24 est mono-injecteur.

Le flux d'air d'échappement AE permet de générer de l'énergie mécanique via la turbine 22 qui peut entrainer l'arbre 23 et le compresseur 21. Dans cet exemple, la turbomachine de chauffage 2 comporte une charge 25, solidaire de l'arbre 23, configurée pour consommer cette énergie mécanique. La charge 25 peut se présenter sous diverses formes, par exemple, une génératrice électrique, une boite d'engrenages, une pompe, un système de transmission ou autre.

Dans cet exemple, la chambre de combustion 24 est alimentée par un flux de carburant Q2 prélevé dans le circuit de carburant CQ en amont du turbomoteur T. A cet effet, le système de conditionnement SC comporte un organe de distribution 4, en particulier une vanne trois voies, afin d'alimenter le turbomoteur T et la chambre de combustion 24 avec des flux de carburant Q1, Q2.

Selon l'invention, la turbomachine de chauffage 2 comprend en outre un circuit de fluide CM dans lequel circule d'amont vers l'aval un fluide caloporteur M. Dans cette première forme de réalisation, le fluide caloporteur M est de l'azote mais il va de soi que cela pourrait être différent.

Selon l'invention, en référence à la figure 2, la turbomachine de chauffage 2 comprend un échangeur thermique post-combustion 32, monté dans le circuit de fluide CM, configuré pour prélever de calories prélevées dans le flux d'air d'échappement AE en sortie de la chambre de combustion 24. De manière préférée, l'échangeur thermique post-combustion 32 est monté dans le circuit de fluide CM en aval de la turbine 22 de manière à prélever des calories au flux d'air d'échappement AE qui est chaud et possède une pression élevée. L'échangeur thermique post-combustion 32 est de préférence réalisé dans un matériau adapté aux hautes températures, préférentiellement peu poreux, par exemple, en céramique.

La turbomachine de chauffage 2 comprend également un échangeur thermique d'échappement 31, monté dans le circuit de fluide CM, configuré pour réchauffer le fluide caloporteur M à partir de calories prélevées dans le flux d'air d'échappement AE en sortie de la turbine 22.

Dans cet exemple, l'échangeur thermique d'échappement 31 est monté dans le circuit de fluide CM en amont de l'échangeur thermique post-combustion 32. Le fluide caloporteur M est ainsi chauffé de manière progressive (moins de gradient thermique) par l'échangeur thermique d'échappement 31 puis l'échangeur thermique post-combustion 32, ce qui permet de répartir les flux thermiques. La durée de vie des échangeurs thermiques 31, 32 est ainsi augmentée. Il va de soi qu'une circulation inversée, c'est-à-dire, de l'échangeur thermique post-combustion 32 vers l'échangeur thermique d'échappement 31 est également possible. De préférence, la circulation des fluides dans chacun des échangeurs thermiques 31, 32 peut être organisée en mode contre-courant ou courant croisé qui sont efficaces. Un échange à co-courants est toutefois possible.

Toujours en référence à la figure 2, le système de conditionnement SC comporte en outre un échangeur thermique 33 monté dans le circuit de carburant CQ et dans le circuit de fluide CM afin de permettre au fluide caloporteur M de transmettre des calories au flux de carburant Q afin de le réchauffer. De manière préférée, l'organe de distribution 4 est positionné en aval de l'échangeur thermique 33 de manière à fournir un flux de carburant Q1 à l'état gazeux à la chambre de combustion 24 de la turbomachine de chauffage 2 et au turbomoteur T. Le fluide caloporteur M circule ainsi selon une boucle fermée.

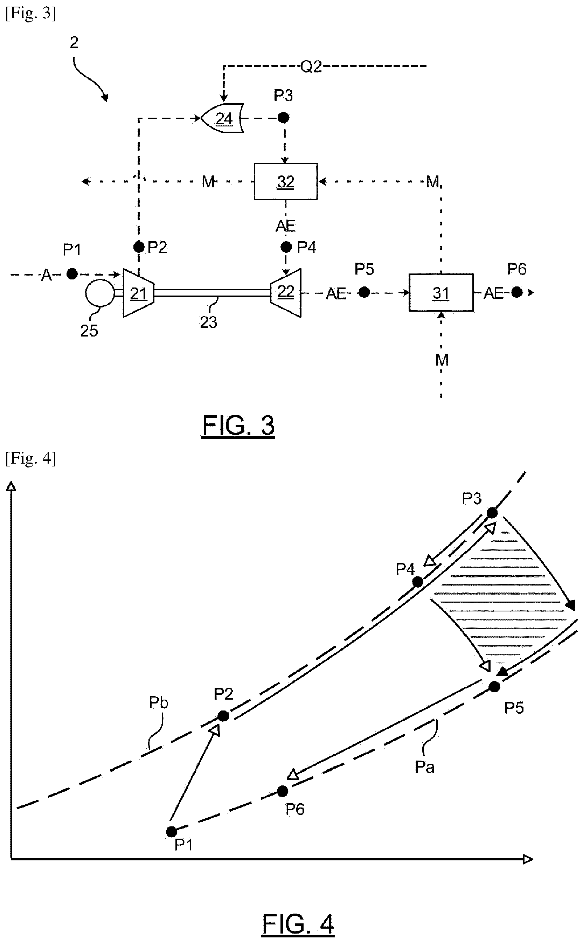

Dans cette forme de réalisation, la chambre de combustion 24 est positionnée, de manière classique entre le compresseur 21 et la turbine 22, en particulier, de manière annulaire autour de l'arbre 23. L'échangeur thermique post-combustion 32 est placé entre la chambre de combustion 24 et la turbine 22. Cela permet un déplacement du flux d'air A de la gauche vers la droite en référence à la figure 3. De manière préférée, la turbine 22 et l'échangeur thermique d'échappement 31 sont alignés axialement. L'échangeur thermique d'échappement 31 et l'échangeur thermique post-combustion 32 sont superposés verticalement. Une telle architecture permet d'augmenter la compacité de la turbomachine de chauffage 2 et donc de faciliter l'intégration dans le système de conditionnement SC.

Différents types de technologies peuvent être mis en œuvre dans les échangeurs thermiques 31, 32, 33, à savoir, une technologie tubulaire, une technologie à plaques, une technologie à ailettes, etc.

Un exemple de conditionnement de carburant va être présenté en référence à la figure 2. Un flux de carburant Q à l'état liquide est prélevé dans le réservoir cryogénique RC et est conduit d'amont vers l'aval dans le circuit de carburant CQ. Le flux de carburant Q est chauffé dans l'échangeur thermique 33 par circulation du fluide caloporteur M. Les flux de carburant Q1, Q2 sont ensuite acheminés au turbomoteur T et à la turbomachine de chauffage 2 via l'organe de distribution 4.

En référence à la figure 3 et à la figure 4, il est représenté de manière détaillée la circulation du fluide caloporteur M dans l'échangeur thermique d'échappement 31 puis dans l'échangeur thermique post-combustion 32 afin qu'il prélève des calories au flux d'air d'échappement AE. La figure 4 présente schématiquement le cycle énergétique de la turbomachine de chauffage 2 à divers points de fonctionnement P1-P6 avec en abscisse l'entropie et en ordonnée la température.

La turbomachine de chauffage 2 est alimentée par un flux d'air A qui est prélevé à une première ligne pression Pa (Figure 4) qui correspond, dans cet exemple, à la pression ambiante (point de fonctionnement P1). Le flux d'air A est ensuite comprimé par le compresseur 21 pour atteindre une deuxième ligne pression Pb (Figure 4), supérieure à la première ligne de pression Pa (point de fonctionnement P2).

La chambre de combustion 24 de la turbomachine de chauffage 2 est alimentée par un flux de carburant Q2 et par le flux d'air A de deuxième pression Pb afin d'émettre en sortie un flux d'air d'échappement AE ayant une pression et une température plus importante (point de fonctionnement P3).

Le flux d'air d'échappement AE traverse ensuite l'échangeur thermique post-combustion 32 afin de lui transférer des calories, ce qui permet d'abaisser sa température et sa pression (point de fonctionnement P4).

Le flux d'air d'échappement AE est détendu dans la turbine 22, ce qui entraine en rotation le compresseur 21 via l'arbre 23. Lors de sa détente, la pression et la température du flux d'air d'échappement AE baissent (point de fonctionnement P5).

Le flux d'air d'échappement AE traverse ensuite l'échangeur thermique d'échappement 31 afin de lui transférer des calories, ce qui permet d'abaisser sa température et sa pression (point de fonctionnement P6). De manière préférée, le flux d'air d'échappement AE est évacué dans le milieu ambiant.

L'intégration d'un échangeur thermique post-combustion 32 entre la chambre de combustion 24 et la turbine 22 permet avantageusement d'augmenter la température du fluide caloporteur M tout en baissant l'énergie fournie à la turbine 22. Autrement dit, cela permet de favoriser la récupération thermique au détriment de l'énergie mécanique, ce qui est avantageux dans le contexte de l'invention. Comme représenté sur le schéma de la figure 4, la zone hachurée correspond à l'énergie qui est consommée de manière thermique au lieu de manière mécanique en l'absence d'échangeur thermique post-combustion 32.

De manière avantageuse, grâce à l'invention, la turbomachine de chauffage 2 permet de maximiser le transfert de chaleur, l'entrainement mécanique d'une charge 25 telle qu'une génératrice est alors accessoire. L'échangeur thermique post-combustion 32 permet avantageusement de moduler l'apport de chaleur au fluide caloporteur M. Par comparaison à une turbomachine auxiliaire traditionnelle, le rendement thermique est très élevé. L'énergie thermique générée n'est plus proportionnelle à l'énergie mécanique générée.

Le procédé peut être mise en œuvre pour assurer différents types de régulation en fonction des contraintes et des besoins. Par exemple, la régulation peut, alternativement :
- Maintenir une vitesse de rotation de la turbomachine de chauffage 2 afin de permettre une génération optimale de puissance par la charge 25,
- Maintenir une température constante en entrée de la turbine 22,
- Maintenir une température de fluide caloporteur M constante en sortie de l'échangeur thermique post-combustion 32,
- Assurer une différence de température de fluide caloporteur M suffisante entre l'entrée de l'échangeur thermique d'échappement 31 et la sortie de l'échangeur thermique post-combustion 32 de manière à permettre un prélèvement optimal de calories.

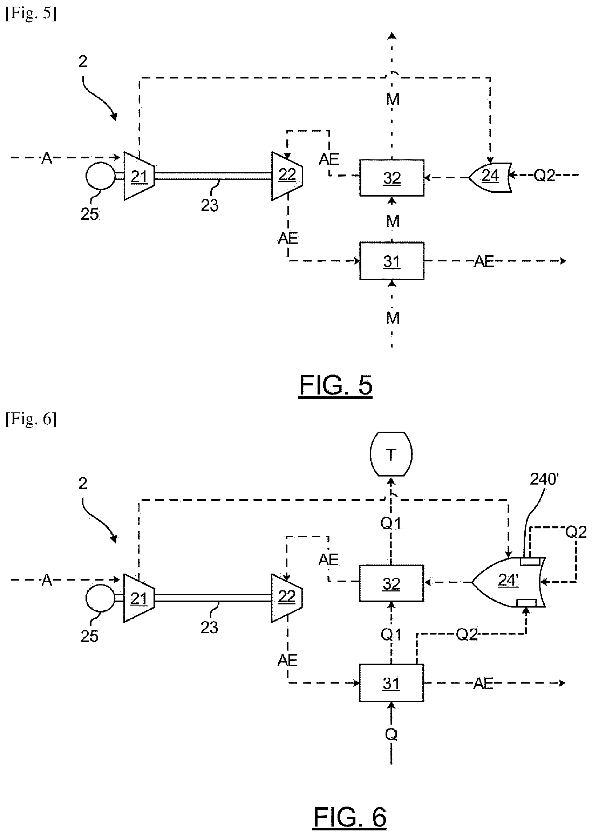

D'autres formes de réalisations de l'invention sont représentées aux figures 5 à 7. Par souci de clarté et de concision, chaque forme de réalisation n'est pas représentée de nouveau et seules les différences avec la première forme de réalisation sont détaillées. Des références numériques analogues sont utilisées pour décrire les différentes formes de réalisation.

En référence à la figure 5, il est représenté une deuxième forme de réalisation d'une turbomachine de chauffage 2 selon l'invention.

Dans cette forme de réalisation, la turbine 22, l'échangeur thermique post-combustion 32 et la chambre de combustion 24 sont alignés axialement. De manière avantageuse, une telle architecture permet d'éviter que l'arbre 23 de la turbomachine de chauffage 2 ne s'étende pas dans la chambre de combustion 24, ce qui simplifie sa structure. Une chambre de combustion 24 de forme mono-tubulaire peut être avantageusement utilisée, ce qui augmente la compacité.

L'échangeur thermique d'échappement 31 et l'échangeur thermique post-combustion 32 sont en outre superposés verticalement. Cela permet de capter successivement des calories dans les deux échangeurs thermiques 31, 32. Une telle architecture permet d'augmenter la compacité de la turbomachine de chauffage 2 et donc de faciliter l'intégration dans le système de conditionnement SC,

De manière préférée, afin d'éviter tout risque d'inflammation, il est souhaitable d'utiliser un fluide caloporteur M non oxydant, comme de l'azote. Néanmoins, il est également possible de faire circuler directement un flux de carburant Q1 dans l'échangeur thermique post-combustion 32 avec le flux d'air d'échappement AE comprenant de l'oxygène.

En référence à la figure 6, il est représenté une troisième forme de réalisation d'une turbomachine de chauffage 2 selon l'invention dont l'architecture est analogue à la deuxième forme de réalisation.

Dans cette forme de réalisation, le flux de carburant Q1 est utilisé directement comme fluide caloporteur et circule successivement dans l'échangeur thermique d'échappement 31 et dans l'échangeur thermique post-combustion 32 afin d'alimenter le turbomoteur T. Autrement dit, la turbomachine de chauffage 2 est montée directement dans le circuit de carburant CQ.

Selon un aspect de l'invention, la turbomachine de chauffage 2 comporte une chambre de combustion 24' qui comporte un échangeur thermique auxiliaire 240' configuré pour prélever du carburant en amont de l'échangeur thermique post-combustion 32 et pour le réchauffer au contact de la chambre de combustion 24'. Le flux de carburant Q2 réchauffé par l'échangeur thermique auxiliaire 240' permet d'alimenter la chambre de combustion 24'. Cela permet d'augmenter l'intégration de la turbomachine de chauffage 2 en évitant de prévoir une conduite en aval de l'échangeur thermique post-combustion 32 pour alimenter la chambre de combustion 24'. De manière préférée, le flux de carburant Q2 est à l'état gazeux en sortie de l'échangeur thermique d'échappement 31 et un débit très faible est nécessaire pour alimenter la chambre de combustion 24'. Etant donné que le débit est faible, le chauffage du flux de carburant Q2 peut être réalisé avec un échangeur thermique auxiliaire 240' de faible encombrement.

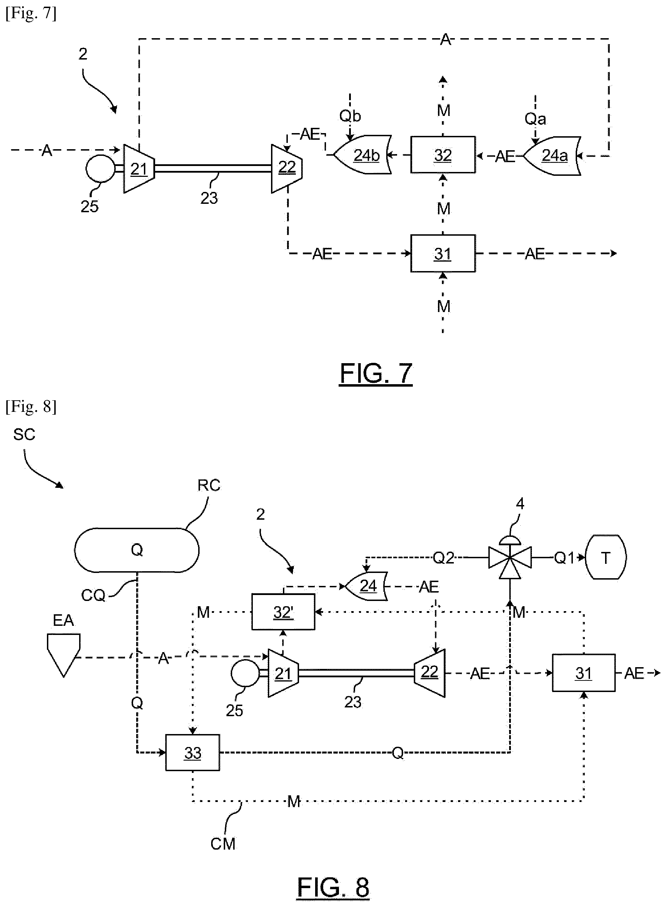

En référence à la figure 7, il est représenté une quatrième forme de réalisation d'une turbomachine de chauffage 2 selon l'invention dont l'architecture est analogue à la deuxième forme de réalisation.

Dans cette forme de réalisation, la turbomachine de chauffage 2 comporte une première chambre de combustion 24a en amont de l'échangeur thermique post-combustion 32 et une deuxième chambre de combustion 24b en aval de l'échangeur thermique post-combustion 32. Autrement dit, la deuxième chambre de combustion 24b est montée entre l'échangeur thermique post-combustion 32 et la turbine 22. Chaque chambre de combustion 24a, 24b est alimentée par un flux de carburant Qa, Qb qui peut être piloté de manière indépendante pour obtenir les conditions de fonctionnement souhaitées (delta de température, température en entrée de turbine 22, etc.).

La deuxième chambre de combustion 24b permet avantageusement de réchauffer le flux d'air d'échappement AE, qui a été refroidi par la première chambre de combustion 24a, afin que le flux d'air d'échappement AE possède une température élevée en traversant la turbine 22. En effet, une température élevée du flux d'air d'échappement AE permet d'optimiser le rendement de la turbine 22 et permet de limiter l'encombrement de cette dernière. La turbine 22 peut avantageusement posséder une structure analogue à une turbine traditionnelle.

Il va de soi que les formes de réalisation sont combinables entre elles. Plusieurs formes de réalisation peuvent utiliser le flux de carburant Q comme fluide caloporteur. De même, plusieurs formes de réalisation peuvent utiliser deux chambres de combustion 24a, 24b.

En référence à la figure 8, il est représenté une autre forme de réalisation d'une turbomachine de chauffage 2 dont l'architecture est analogue à la deuxième forme de réalisation.

Dans cette forme de réalisation, la turbomachine de chauffage 2 comprend un échangeur thermique pré-combustion 32', monté dans le circuit de fluide CM, configuré pour prélever de calories prélevées dans le flux d'air accéléré en sortie du compresseur 21. L'échangeur thermique pré-combustion 32' est positionné avant la chambre de combustion 24. Un échangeur thermique pré-combustion 32' est moins exposé aux contraintes thermiques et mécaniques par comparaison à un échangeur thermique post-combustion 32. Un échangeur thermique pré-combustion 32' permet avantageusement de refroidir le flux d'air d'admission accéléré A1 en sortie du compresseur 21, ce qui permet à la chambre de combustion 24 de fournir une plus grande énergie thermique.

## Revendications

1. Ensemble comprenant un réservoir cryogénique (RC), un turbomoteur d'aéronef (T) et un système de conditionnement de carburant (SC) reliant le réservoir cryogénique (RC) au turbomoteur d'aéronef (T), le système de conditionnement (SC) comprenant :
- un circuit de carburant (CQ) configuré pour relier le réservoir cryogénique (RC) au turbomoteur d'aéronef (T) et
- une turbomachine de chauffage (2) comprenant :
- un compresseur (21) configuré pour être alimenté par un flux d'air (A) issu d'une entrée d'air (EA),
- une turbine (22) reliée au compresseur (21) par un arbre de turbomachine (23) et
- une chambre de combustion (24) configurée pour être alimentée, d'une part, par le flux d'air (A) issu du compresseur (21) et, d'autre part, par un flux de carburant (Q2), la chambre de combustion (24) étant configurée pour évacuer un flux d'air d'échappement (AE) chargé de calories et entrainer en rotation la turbine (22),
- au moins un circuit de fluide (CM) dans lequel circule, d'amont vers l'aval, un fluide caloporteur,
- au moins un échangeur thermique d'échappement (31), monté dans le circuit de fluide (CM), configuré pour réchauffer le fluide caloporteur (M) à partir de calories prélevées dans le flux d'air d'échappement (AE) en sortie de la turbine (22),
- la turbomachine de chauffage (2) étant configurée pour réchauffer le flux de carburant (Q) circulant dans le circuit de carburant (CQ) à partir de calories prélevées par le fluide caloporteur (M), la chambre de combustion (24) étant alimentée par un flux de carburant (Q2) issu du circuit de carburant (CQ),
- **caractérisé en ce que** la turbomachine de chauffage (2) comprend au moins un échangeur thermique post-combustion (32), monté dans le circuit de fluide (CM), configuré pour prélever des calories dans le flux d'air d'échappement (AE) entre la chambre de combustion (24) et la turbine (22).

2. Ensemble selon la revendication 1, dans laquelle l'échangeur thermique post-combustion (32) est monté en aval de l'échangeur thermique d'échappement (31) dans le circuit de fluide (CM).

3. Ensemble selon l'une des revendications 1 à 2, dans laquelle l'échangeur thermique post-combustion (32) et l'échangeur thermique d'échappement (31) sont montés de manière adjacente.

4. Ensemble selon l'une des revendications 1 à 3, dans laquelle l'échangeur thermique post-combustion (32) s'étend co-axialement à l'arbre de turbomachine (23).

5. Ensemble selon l'une des revendications 1 à 4, dans laquelle la chambre de combustion (24) est tubulaire et s'étend co-axialement à l'arbre de turbomachine (23).

6. Ensemble selon l'une des revendications 1 à 5, dans laquelle la chambre de combustion (24') comporte un échangeur thermique auxiliaire (240') configuré pour réchauffer un flux de carburant (Q2) destiné à l'alimentation de ladite chambre de combustion (24').

7. Ensemble selon l'une des revendications 1 à 6, comprenant une première chambre de combustion (24a) en amont de l'échangeur thermique post-combustion (32) et une deuxième chambre de combustion (24b) en aval de l'échangeur thermique post-combustion (32).

8. Ensemble selon l'une des revendications 1 à 7 comprenant un échangeur thermique (33) monté dans le circuit de carburant (CQ) pour échanger des calories avec le fluide caloporteur (M).

9. Ensemble selon l'une des revendications 1 à 7 dans laquelle le flux de carburant (Q1) est utilisé directement comme fluide caloporteur (M) dans la turbomachine de chauffage (2).

10. Procédé de chauffage d'un fluide caloporteur (M) au moyen d'une turbomachine de chauffage (2) dans un ensemble selon l'une des revendications 1 à 9, le fluide caloporteur (M) circulant d'amont vers l'aval dans le circuit de fluide (CM), le procédé comprenant les étapes consistant à :
- Alimenter le compresseur (21) par un flux d'air (A),
- Alimenter la chambre de combustion (24), d'une part, par le flux d'air (A) issu du compresseur (21) et, d'autre part, par un flux de carburant (Q2), la chambre de combustion (24) évacuant un flux d'air d'échappement (AE) chargé de calories afin d'entrainer en rotation la turbine (22) et
- Réchauffer le fluide caloporteur dans l'échangeur thermique post-combustion (32) à partir de calories prélevées dans le flux d'air d'échappement (AE) en sortie de la chambre de combustion (24).

## Patentansprüche

1. Anordnung, umfassend einen Kryotank (RC), ein Flugzeugturbotriebwerk (T) und ein Brennstoffaufbereitungssystem (SC), das den Kryotank (RC) mit dem Flugzeugturbotriebwerk (T) verbindet, wobei das Aufbereitungssystem (SC) umfasst:
- einen Brennstoffkreis (CQ), der dazu ausgelegt ist, den Kryotank (RC) mit dem Flugzeugturbotriebwerk (T) zu verbinden, und
- eine Heizturbomaschine (2), die umfasst:
- einen Kompressor (21), der dazu ausgelegt ist, mit einem Luftstrom (A) aus einem Lufteinlass (EA) versorgt zu werden,
- eine Turbine (22), die über eine Turbomaschinenwelle (23) mit dem Kompressor (21) verbunden ist, und
- eine Brennkammer (24), die dazu ausgelegt ist, einerseits mit dem von dem Kompressor (21) kommenden Luftstrom (A) und andererseits mit einem Brennstoffstrom (Q2) versorgt zu werden, wobei die Brennkammer (24) dazu ausgelegt ist, einen mit Wärmeenergie angereicherten Abluftstrom (AE) abzugeben und die Turbine (22) rotatorisch anzutreiben,
- mindestens einen Fluidkreis (CM), in dem von stromaufwärts nach stromabwärts ein Wärmeträgerfluid zirkuliert,
- mindestens einen Abluftwärmetauscher (31), der in den Fluidkreis (CM) eingebaut ist und dazu ausgelegt ist, das Wärmeträgerfluid (M) mit Wärmeenergie zu erwärmen, die dem Abluftstrom (AE) am Ausgang der Turbine (22) entnommen wird,
- wobei die Heizturbomaschine (2) dazu ausgelegt ist, den in dem Brennstoffkreis (CQ) zirkulierenden Brennstoffstrom (Q) mit von dem Wärmeträgerfluid (M) entnommener Wärmeenergie zu erwärmen, wobei die Brennkammer (24) mit einem aus dem Brennstoffkreis (CQ) stammenden Brennstoffstrom (Q2) versorgt wird,
- **dadurch gekennzeichnet, dass** die Heizturbomaschine (2) mindestens einen Nachverbrennungswärmetauscher (32) umfasst, der in dem Fluidkreis (CM) angeordnet und dazu ausgelegt ist, dem Abluftstrom (AE) zwischen der Brennkammer (24) und der Turbine (22) Wärmeenergie zu entnehmen.

2. Anordnung nach Anspruch 1, wobei der Nachverbrennungswärmetauscher (32) im Fluidkreis (CM) stromabwärts des Abluftwärmetauschers (31) angeordnet ist.

3. Anordnung nach einem der Ansprüche 1 bis 2, wobei der Nachverbrennungswärmetauscher (32) und der Abluftwärmetauscher (31) nebeneinander angeordnet sind.

4. Anordnung nach einem der Ansprüche 1 bis 3, wobei sich der Nachverbrennungswärmetauscher (32) koaxial zu der Turbomaschinenwelle (23) erstreckt.

5. Anordnung nach einem der Ansprüche 1 bis 4, wobei die Brennkammer (24) rohrförmig ist und sich koaxial zu der Turbomaschinenwelle (23) erstreckt.

6. Anordnung nach einem der Ansprüche 1 bis 5, wobei die Brennkammer (24') einen Hilfswärmetauscher (240') aufweist, der dazu ausgelegt ist, einen für die Versorgung der Brennkammer (24') bestimmten Brennstoffstrom (Q2) zu erwärmen.

7. Anordnung nach einem der Ansprüche 1 bis 6, umfassend eine erste Brennkammer (24a) stromaufwärts des Nachverbrennungswärmetauschers (32) und eine zweite Brennkammer (24b) stromabwärts des Nachverbrennungswärmetauschers (32).

8. Anordnung nach einem der Ansprüche 1 bis 7, umfassend einen in dem Brennstoffkreis (CQ) angeordneten Wärmetauscher (33), um Wärmeenergie mit dem Wärmeträgerfluid (M) auszutauschen.

9. Anordnung nach einem der Ansprüche 1 bis 7, wobei der Brennstoffstrom (Q1) direkt als Wärmeträgerfluid (M) in der Heizturbomaschine (2) verwendet wird.

10. Verfahren zum Erwärmen eines Wärmeträgerfluids (M) mittels einer Heizturbomaschine (2) in einer Anordnung nach einem der Ansprüche 1 bis 9, wobei das Wärmeträgerfluid (M) in dem Fluidkreis (CM) von stromaufwärts nach stromabwärts zirkuliert, wobei das Verfahren die folgenden Schritte umfasst:
- Versorgen des Kompressors (21) mit einem Luftstrom (A),
- Versorgen der Brennkammer (24) einerseits mit dem von dem Kompressor (21) kommenden Luftstrom (A) und andererseits mit einem Brennstoffstrom (Q2), wobei die Brennkammer (24) einen mit Wärmeenergie angereicherten Abluftstrom (AE) abgibt, um die Turbine (22) rotatorisch anzutreiben, und
- Erwärmen des Wärmeträgerfluids in dem Nachverbrennungswärmetauscher (32) mit dem Abluftstrom (AE) am Ausgang der Brennkammer (24) entnommener Wärmeenergie.

## Claims

1. An assembly comprising a cryogenic tank (RC), an aircraft turboshaft engine (T) and a fuel-conditioning system (SC) connecting the cryogenic tank (RC) to the aircraft turboshaft engine (T), the fuel-conditioning system (SC) comprising:
• a fuel circuit (QC) configured to connect the cryogenic tank (RC) to the aircraft turboshaft engine (T) and
• a heating turbomachine (2) comprising:
- a compressor (21) configured to be supplied by an air flow (A) from an air inlet (EA),
- a turbine (22) connected to the compressor (21) by a turbomachine shaft (23) and
- a combustion chamber (24) configured to be supplied, on the one hand, with the air flow (A) from the compressor (21) and, on the other hand, by a fuel flow (Q2), the combustion chamber (24) being configured to discharge an exhaust air flow (AE) loaded with heat energy and to rotate the turbine (22),
- at least one fluid circuit (CM) in which circulates, from upstream to downstream, a heat-transfer fluid,
- at least one exhaust heat exchanger (31), mounted in the fluid circuit (CM), configured to heat the heat-transfer fluid (M) from heat energy extracted from the exhaust air flow (AE) at the outlet of the turbine (22),
- the heating turbomachine (2) being configured to heat the fuel stream (Q) circulating through the fuel system (CQ) from heat energy extracted by the heat transfer fluid (M), the combustion chamber (24) being supplied by a fuel flow (Q2) from the fuel system (CQ).
- **characterized in that** the heating turbomachine (2) comprises at least one post combustion heat exchanger (32), mounted in the fluid circuit (CM), configured to extract heat energy from the exhaust air flow (AE) between the combustion chamber (24) and the turbine (22).

2. The assembly as claimed in claim 1, wherein the post-combustion heat exchanger (32) is mounted downstream of the exhaust heat exchanger (31) in the fluid circuit (CM).

3. The assembly according to any of claims 1 to 2, wherein the post-combustion heat exchanger (32) and the exhaust heat exchanger (31) are mounted adjacent to each other.

4. The assembly according to any one of claims 1 to 3, wherein the post-combustion heat exchanger (32) extends co-axially with the turbomachine shaft (23).

5. The assembly according to any of claims 1 to 4, wherein the combustion chamber (24) is tubular and extends co-axially with the turbomachine shaft (23).

6. The assembly according to one of claims 1 to 5, wherein the combustion chamber (24') comprises an auxiliary heat exchanger (240') configured to heat a fuel flow (Q2) configured to supply said combustion chamber (24').

7. The assembly according to one of claims 1 to 6, comprising a first combustion chamber (24a) upstream of the post-combustion heat exchanger (32) and a second combustion chamber (24b) downstream of the post-combustion heat exchanger (32).

8. The assembly according to claims 1 to 7 comprising a heat exchanger (33) mounted in the fuel circuit (CQ) for exchanging heat energy with the heat-transfer fluid (M).

9. The assembly according to claims 1 to 7 wherein the fuel flow (Q1) is used directly as a heat-transfer fluid (M) in the heating turbomachine (2).

10. A method for heating a heat-transfer fluid (M) by means of a heating turbomachine (2) in an assembly according to one of claims 1 to 9, the heat-transfer fluid (M) circulating from upstream to downstream in the fluid circuit (CM), the method comprising the steps consisting in:
- Supplying the compressor (21) with an air flow (A),
- Supplying the combustion chamber (24), on the one hand, with the air flow (A) from the compressor (21) and, on the other hand, with a fuel flow (Q2), the combustion chamber (24) discharging an exhaust air flow (AE) loaded with heat energy in order to rotate the turbine (22) and
- Heating the heat-transfer fluid in the post-combustion heat exchanger (32) using heat energy extracted from the exhaust air flow (AE) at the outlet of the combustion chamber (24).
